# EUROPEAN PATENT SPECIFICATION

(11) **EP 1 596 397 B1**
(45) Date of publication and mention of the grant of the patent: **02.07.2014**
(21) Application number: 05300354.7
(22) Date of filing: 04.05.2005
(51) Int. Cl.: G11B 27/034, G11B 27/10, G11B 27/32, H04N 9/82, H04N 5/85

(54) **Method for splitting a data stream**
Verfahren zum Teilen eines Datenstroms
Procédé pour séparer un flux de données

(30) Priority: 15.05.2004 EP 04011609
(43) Date of publication of application: 16.11.2005
(73) Proprietor: Thomson Licensing, 92130 Issy-les-Moulineaux (FR)
(72) Inventor: Winter, Marco, 30173 Hannover (DE)
(74) Representative: Rittner, Karsten

(56) References cited:
- US-A1- 2004 062 516
- PATENT ABSTRACTS OF JAPAN vol. 1998, no. 06, 30 April 1998 (1998-04-30) & JP 10 032826 A (OKI ELECTRIC IND CO LTD), 3 February 1998 (1998-02-03)

## Description

### Field of the invention

This invention relates to a method for splitting a data stream. In particular, the invention relates to a method for splitting a data stream under a file system that allows only packet-wise access to streaming data.

### Background

Optical discs are commonly used as storage media for audio-visual (AV) data. These discs are divided into logical units, usually sectors, where data portions are stored. Further, various file systems are available for the organization of the data storage on discs. These file systems can be classified in two types: while in one file system type any data byte position is randomly accessible, the other type of file systems can only access specified data units, e.g. sectors. The latter is the case e.g. for the Universal Disk Format (UDF) specified by the Optical Storage Technology Association (OSTA, www.osta.org). File systems generally define e.g. which data units belong to a file. E.g. UDF uses so-called "file entries" for this purpose.

When video data are recorded on an optical disc, e.g. a Digital Versatile Disc (DVD) or Rewritable Blu-ray disc (BD-RE), a hierarchical logical structure is used for the organization of the data. This structure comprises a playlist stored in a playlist file, containing references to clip information files that in turn describe video sequences, so-called clips. The clips contain the actual AV data files. When AV data shall be edited that are recorded on a rewritable optical medium, the editing process usually includes splitting of files. But when a video recording shall be split, the splitting position may be within the smallest accessible data unit, e.g. a sector. In this case, splitting is difficult with a file system that can only access full sectors.

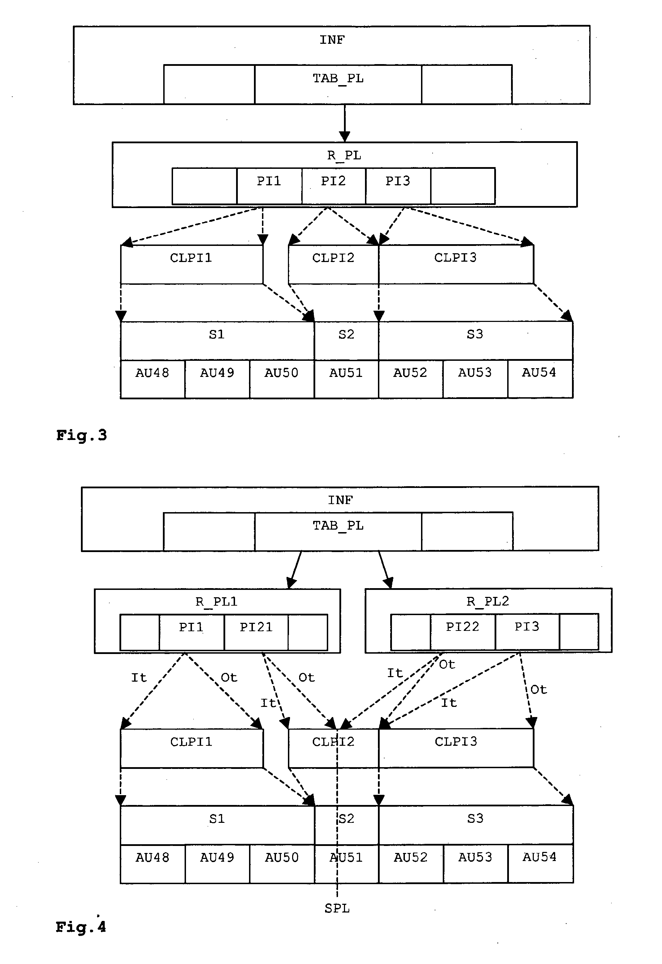

Editing of video data stored on a BD-RE is described e.g. in Fig. 3.1.5.4 of part 3 of the BD-RE description that is available from the official Blu-ray website (www.blu-raydisc-official.org/tecinfo/data/part3.pdf). It uses the dividing and combining of playlists and newly generated virtual playlists. But it assumes that dividing and combining can be performed at any position within a clip. This is not possible when e.g. UDF is used as file system on the disc.

### Summary of the Invention

The problem to be solved by the present invention is to provide a method for splitting a data stream, e.g. video data stream, which may comprise one or more files, wherein the splitting position may be arbitrary. Particularly, the splitting position may be within the smallest accessible data unit, e.g. on an optical disc or hard-disc (HDD).

This problem is solved by the invention as disclosed in claim 1. The inventive method comprises identifying the smallest data unit that includes the intended splitting position and that can be converted to a separate file, splitting the stream before and after said data unit, thus declaring this data unit (and potentially few neighboring data units) as a separate first file, declaring the preceding stream data as a second file and the subsequent stream data as a third file, and referencing the first substream through the first and second files, and the second substream through the first and third files.

A file may be understood as a data unit that is physically freely accessible within a file system (not taking into account higher layer restrictions, e.g. through security, access right or content protection mechanisms), and that is capable of storing a portion of a data stream.
A data stream may be understood as a steady and continuous sequence of interrelated data, and can be distributed to one or more files.

In particular, the inventive method for splitting a data stream, the data stream comprising one or more files, into a first and a second substream, wherein a file system is employed for defining which data units belong to a file, includes the steps of detecting the smallest data unit that includes the intended splitting position and that can be defined as a separate file, generating from said separated data unit or few data units including said separated data unit a first file, generating from the preceding and the subsequent stream data separate second and third files, and referencing the first substream through the first and second files, and the second substream through the first and third files. The splitting position may be within the smallest data unit that is accessible via the file system.

In principle, the method can be extended to split a data stream into k substreams simultaneously, with k being any integer number, wherein 2k-1 files are generated.

A device for splitting a multimedia data stream is disclosed in claim 10.
The device for splitting a multimedia data stream into a first and a second substream includes means for receiving a splitting position, wherein the splitting position may be within the smallest accessible data unit provided by the application format under the used file system, means for converting the smallest accessible data unit that contains data of both partial data streams, and optionally also few neighboring data units, into a separate first file, and means for converting remaining data units that fully belong to the first partial data stream into a second file and remaining data units that fully belong to the second partial data stream into a third file.

Advantageous embodiments of the invention are disclosed in the dependent claims, the following description and the figures.

### Brief description of the drawings

Exemplary embodiments of the invention are described with reference to the accompanying drawings, which show in
Fig. 1 the hierarchical data structure of a video stream;
Fig.2 the splitting of a data stream into first and second substreams, using a copy of a common data unit;
Fig.3 the splitting of a data stream, using a single RealPlaylist;
Fig.4 the splitting of a data stream, using two separate RealPlaylists;
Fig.5 the splitting of a data stream, using a single VirtualPlaylist;
Fig.6 the splitting of a data stream, using two separate VirtualPlaylists;
Fig.7 the splitting of a data stream, using three separate RealPlaylists and a single VirtualPlaylist; and
Fig.8 an apparatus suitable for splitting a data stream according to the invention.

### Detailed description of the invention

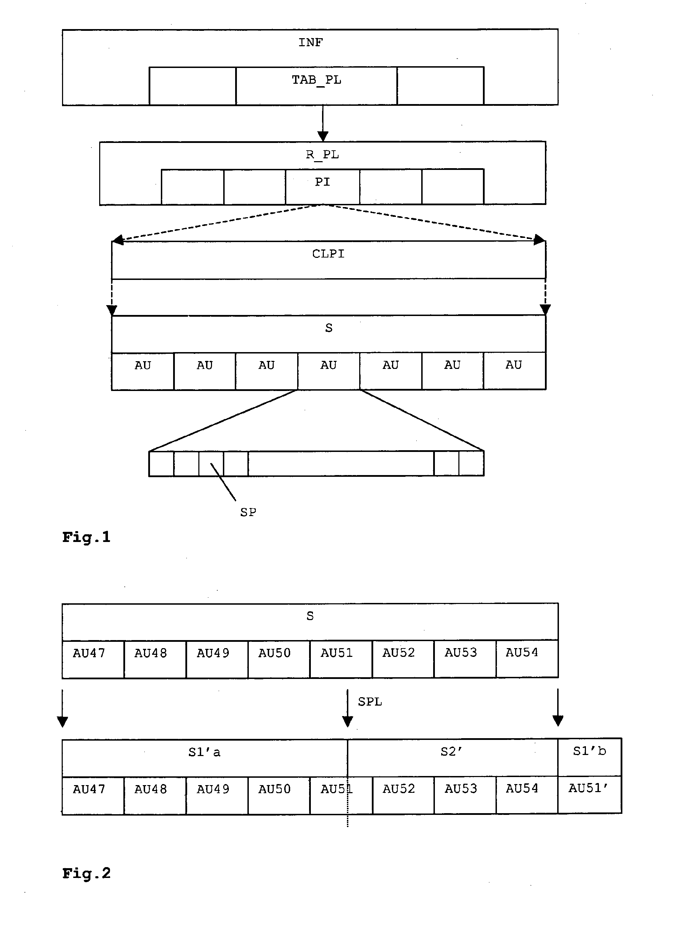

Fig. 1 shows in a simplified manner the layer structure for video data recorded on a recordable optical disc, e.g. DVD or BD-RE, according e.g. to the DVR (Digital Video Recording) application format. An information area INF contains a table of playlists TAB_PL, wherein each table entry points to a playlist R_PL stored on the medium. Playlists are references to clips. Clips contain the links to the actual stream files, which contain the actual audio and/or video data.

There are two types of playlists: RealPlaylists R_PL and VirtualPlaylists. RealPlaylists are created automatically when data are recorded, while VirtualPlaylists are optional and additional alternatives. Each clip is referenced at least by one RealPlaylist, but a single RealPlaylist may reference multiple clips. Playlists refer to a single clip, or part of it, as a PlayItem PI. A clip consists of the actual audio-visual (AV) data stream S and an associated clip information file CLPI. The association is done via filenames, i.e. clip information file and related AV stream file have same names, though they have different file name extensions and may be stored in different directories. E.g. a clip information file stored as AV/CLIPINF/zzzzA.clpi (where zzzzA is e.g. any five-digit numeral) refers to an AV stream in AV/STREAM/zzzzA.m2ts, which generally consists of source packets SP, e.g. MPEG-2 transport stream packets. The clip information file CLPI contains references to timestamps within the source packets SP of the AV data stream S.

The AV data stream S is structured into data units. E.g. in the DVR application format these are called Aligned Units (AU). Each Aligned Unit consists of 3 sectors, which may hold 32 source packets with 192 bytes each. Each source packet contains a timestamp, so that the clip information file can access individual source packets.

When a user wants to split the AV data stream S into two partial streams S1', S2', as shown in Fig.2, the exact split position SPL is given by the video encoding format, e.g. between full video frames, and therefore between source packets. Thus, the split position SPL may be located somewhere within a data unit AU51, which would then belong to both partial streams. The earlier intended file system for Blu-ray, BDFS, is able to handle such a case, i.e. a file may start and/or end somewhere within an access unit. This however is not supported by file systems like UDF and most other existing file systems like NTFS and MS-DOS. A simple solution for these file systems that do not support files starting and/or ending within access units would be to copy the respective data unit AU51 to another position AU51' and build a first stream S1' e.g. from the preceding units AU47, ..., AU50 and the copy AU51', and build a second stream S2' from the original unit AU51 and the successive units AU52, ..., AU54. The application, e.g. AV reproduction software, is assumed to ignore the non-relevant part of the common data unit AU51,AU51' for the first and the second streams. This solution has the disadvantages that AV data must be copied, and that during playback the pick-up must jump to the new position AU51'.

According to the invention, the data unit AU51 that belongs to both data streams is declared as an individually accessible separate data unit, e.g. a clip or a file, as shown in Fig.3. Therefore the data stream is split into three parts S1,S2,S3, wherein one part S1 belongs to the first stream, one part S3 belongs to the second stream and one part S2 belongs to both streams. In order to make each of the fractions separately accessible through the file system, they are converted into separate clips, or files respectively. This can be achieved by splitting the clip information file into three separate clip information files CLPI1, CLPI2, CLPI3 corresponding to the AV stream fractions. Then these new clips are used to compose new playlists.

The invention comprises adapting the hierarchical data structure defined by the application format to the modified allocation of streaming data sectors. Therefore, when a streaming data file shall be split into two fractions or substreams, the original clip information file, e.g. zzzzz.clpi with zzzzz being e.g. any numerals, is divided into three clip information files with names corresponding to the fractions that are now new streaming data files, e.g. zzzzA.clpi for zzzzA.m2ts, zzzzB.clpi for zzzzB.m2ts and zzzzC.clpi for zzzzC.m2ts, with A,B,C being different numerals here. Furthermore, the playlist files are automatically adapted so that they can address the new clip information files correctly, which can be done in various ways as described in the following.

In a first embodiment of the invention, separate single RealPlaylists are created that are each associated with one of the three clip information files or clips, i.e. three RealPlaylists are generated. This can be achieved e.g. by splitting the existing RealPlaylist of the complete stream, copying the relevant data to the new RealPlaylist and adding necessary data, e.g file headers. Then each clip can be accessed individually, and the different clips can be combined using VirtualPlaylists. The original RealPlaylist of the complete stream can then be deleted. Copying of Playlist files is much quicker than copying of AV data files, since Playlist files contain considerably less data.

In a second embodiment of the invention there are only two RealPlaylists generated for the two fractions of the stream, wherein each RealPlaylist is associated with at least two clip information files: one for the data unit that belongs to both streams, and at least one for the data units that belong only to the respective data stream. Then both stream fractions can be accessed individually through their respective RealPlaylists, and the stream fractions can be combined using VirtualPlaylists. Furthermore, a VirtualPlaylist can also access single clips.

In a third embodiment of the invention the three new clips are accessible via a single RealPlaylist, similar to the 'combine-operation' shown in the right-hand part of Fig.3.1.5.4 (3) of the above-mentioned BD description, where only two clips are combined. Two VirtualPlaylists can then be used to describe the first and second partial data stream by accessing the respective clips as PlayItems.

The above-described basic embodiments can be combined, as described in the following.

In one embodiment of the invention, shown in Fig.3, the resulting clips CLPI1, CLPI2, CLPI3 are accessible as PlayItems PI1, PI2, PI3 of a single RealPlaylist R_PL. With this structure, it is possible e.g. to delete AV data that represent only a part of a data unit AU51, because the clip information file CLPI2 can address single source packets within the data unit AU51 via their timestamps.

In another embodiment of the invention, shown in Fig.4, two separate RealPlaylists R_PL1, R_PL2 are generated, so that two independent streams exist. The first RealPlaylist R_PL1 contains PlayItems PI1, PI21 that point to the first clip CLPI1 and the first part of the second clip CLPI2 and their corresponding AV data S1, S2. The second RealPlaylist R_PL2 contains PlayItems PI22, PI3 that point to the second part of the second clip CLPI2 and the third clip CLPI3 and their corresponding AV data S2, S3. This is possible when a playlist can specify a position within a clip, i.e. within a clip information file and thus the corresponding stream, e.g. through a timestamp. In some applications, like e.g. DVR, playlists can specify IN_time It and OUT_time Ot as the beginning and end of a part of a clip. OUT_time of the first part of the second clip and IN_time of the second part of the same clip may be identical, namely the splitting position SPL. Thus, it is possible that a single smallest data unit that an application format provides may contain data that belong to different streams, which is advantageous e.g. when video streams are edited and split, because copying of AV data and additional pick-up jumps during playback are avoided.

During playback of a substream, a split access unit is read completely, but only those data that are referenced in the playlist, and thus belong to the substream, are used. The other data that are contained in the split access unit are ignored.

According to the above-mentioned BD description, the file names and directories in Fig.4 may on a BD using the DVR application format be
BDAV/ info.bdav for the management information for the parent directory INF,
xxxxA.rpls and xxxxB.rpls in BDAV/PLAYLIST/ for the RealPlaylists R_PL1, R_PL2,
zzzzA.clpi, zzzzB.clpi and zzzzC.clpi in BDAV/CLPINF/ for the clip information files CLPI1, CLPI2, CLPI3, and zzzzA.m2ts, zzzzB.m2ts and zzzzC.m2ts in BDAV/STREAM/ for the AV stream data files S1, S2, S3 .

A device for splitting a data stream stored e.g. in the DVR application format into a first and a second partial data stream contains means for receiving a splitting position, e.g. via user input, wherein the splitting position may be within the smallest accessible data unit provided by the application format under the used file system, so that one of the smallest accessible data units contains data belonging to both partial streams, means for converting contiguous data units including the smallest accessible data unit that contains data of both partial data streams into a separate first file, and means for converting remaining data units that fully belong to the first or the second partial data stream into separate second and third files respectively.

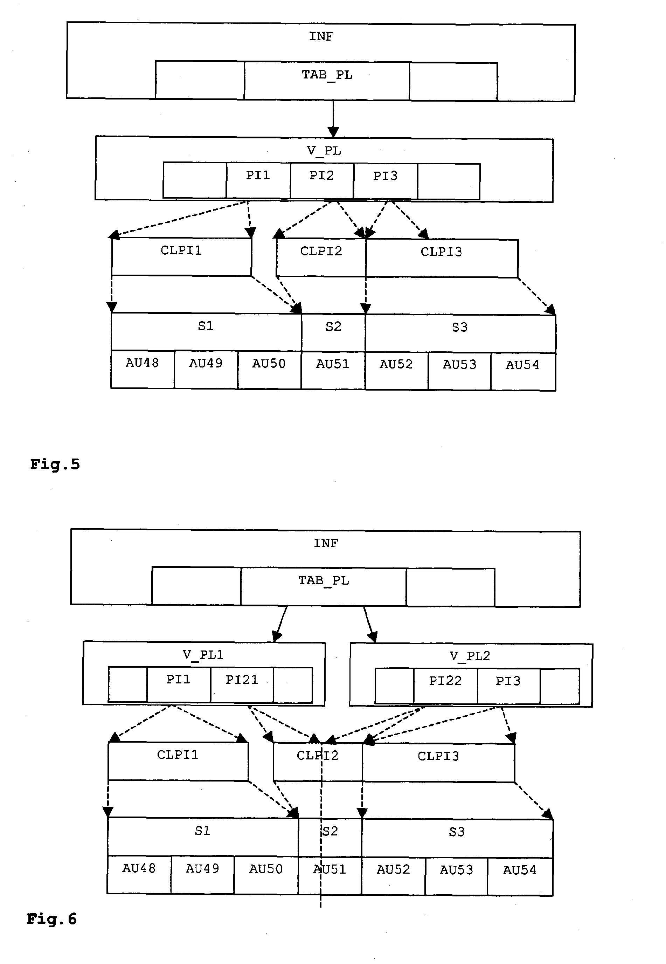

Fig.5 and Fig.6 show further embodiments that are in principle similar to the embodiments of Fig.3 and Fig.4, except that VirtualPlaylists V_PL, V_PL1, V_PL2 are used instead of RealPlaylists. The effect is that the streams may be separately accessible, since they may have separate RealPlaylists as in Fig.4, but the user can append them to a single presentation again by using a VirtualPlaylist V_PL that contains PlayItems PI1, PI2, PI3 referencing all three clips. Further, as shown in Fig.6, VirtualPlaylists can like RealPlaylists specify positions within clips through timestamps of respective packets.

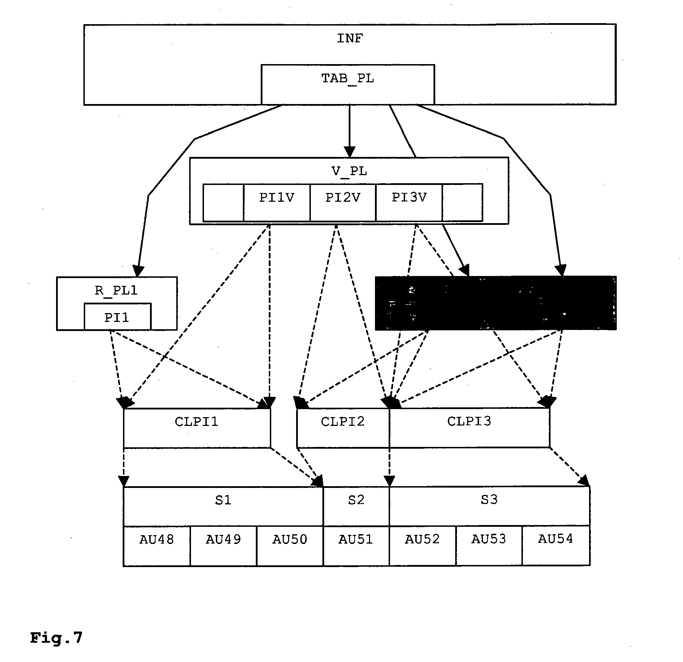

An example for using VirtualPlaylists and RealPlaylists is depicted in Fig.7. The table of playlists TAB_PL contains references to a VirtualPlaylist V_PL as well as references to RealPlaylists R_PL1, R_PL2, R_PL3, and the user can select each of them directly. The VirtualPlaylist refers to the original whole stream, as it was before splitting.

As an advantage of the invention, it is possible to split AV streams without having to copy AV data, and thus without having to accept time-consuming pick-up jumps due to stream fractions being distributed over distant sectors of the disc.

Another advantage of the invention is that it is compliant to all relevant standards, e.g. those mentioned above.

If the splitting location is at the immediate beginning or end of the access unit, then there is no need to split the stream into three parts. In this case, the trivial solution may be applied, i.e. the stream is simply separated into two parts only.

Further, the inventive method and apparatus can be adapted to different situations by combining RealPlaylists and VirtualPlaylists accordingly.

Moreover, with the inventive method it is possible to split a stored data stream simultaneously into any number of fractions at any position. Assuming that splitting positions do not coincide with borders of sectors or access units, the splitting of a data stream into k substreams will result in 2k-1 files when the inventive method is used. If a splitting position is at the beginning or end of a sector or access unit, the splitting can be performed conventionally, and the sector or access unit needs not be converted into a separate file, so that the number of files is lower. A device according to the invention may therefore also contain means for detecting if the splitting position is within such smallest accessible data unit.

It should be noted that the file which includes the AV data unit with the splitting position may also include further AV data units, i.e. it needs not necessarily be restricted to the smallest possible amount of data around the actual splitting position. However, in a preferred embodiment this file is as small as possible, since in that case it contains the minimum amount of data to be ignored during playback.

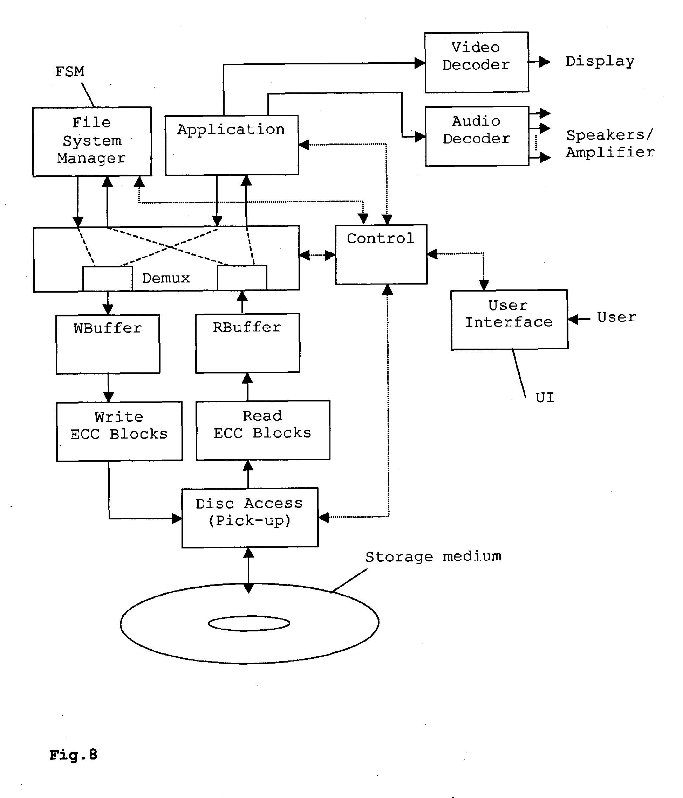

An exemplary apparatus according to the invention is shown in Fig.8. A pick-up reads data with the above-described structure from a rewritable storage medium, e.g. disc. Data integrity is secured by analysis of error correction code (ECC) blocks, and correctable errors are corrected. Then the data are buffered in a read buffer. While for playback, e.g. control output for editing, the data are delivered to a corresponding application that provides compressed AV data to audio and/or video decoders, an editing process requires data to be re-organized or re-labeled by a file system manager. A demultiplexing unit performs the distribution of the data, controlled by a control unit.

User input is received via a user interface and is used to move the pick-up to the required position. The stream to be split is read by the pick-up, checked for errors, which are possibly corrected, buffered in a read buffer, and directed through a demultiplexer to the file system manager.

The control unit detects for the user-requested splitting position the nearest possible actual splitting position, which depends on the used application and may be e.g. a packet border. Then the control unit communicates the actual splitting position to the file system manager, which determines a preferably small region around said position to be declared as a separate file, and further converts this region as well as the preceding and the subsequent parts of the stream into three separate files. For this purpose, the file system manager also generates or modifies other files in the application specific data structure, e.g. the clip information files, as described above. The modified data are then in the usual way written back to the storage medium, using a write buffer and error correction coding.

The invention is usable for various application formats. In principle, the invention is applicable to all stream recording formats, where streams are stored as separate files that can be accessed via playlists or similar structures, e.g. 'program chains', and the accessible units of the applications may start or end within an accessible unit of the underlying file system, e.g. DVD Video Recording (DVD-VR) data on an MS-DOS partition (e.g. 4kB cluster of a FAT16 partition).

## Claims

1. A method for splitting a data stream (S), the data stream (S) comprising one or more files, into a first and a second substream, wherein a file system is employed for defining which data units belong to a file, the method comprising the steps of
- detecting within the data stream (S) the smallest data unit (AU51) that includes the intended splitting position (SPL) and that can be defined as a separate file;
- generating a separate first file (S2), the first file (S2) including said data unit (AU51) with the intended splitting position (SPL) and optionally one or more neighboring data units;
- generating separate second and third files (S1,S3), wherein the second file (S1) includes the stream data (AU48,...,AU50) preceding the stream data (AU51) of the first file (S2) and the third file (S3) includes the stream data (AU52,...,AU54) subsequent to the stream data (AU51) of the first file (S2) ; and
- referencing (PI1,PI21) the first substream through the first and second files (S2,S1) and referencing (PI22,PI3) the second substream through the first and third files (S2,S3).

2. Method according to claim 1, wherein the separate first file (S2) includes only said data unit (AU51).

3. Method according to claim 1 or 2, wherein generating the first, the second and the third files (S1,...,S3) comprises generating corresponding first, second and third clip information files (CLPI1,...,CLPI3), and wherein said referencing of the first, second and third files (S1,S2,S3) comprises referencing (PI1, PI21,PI22,PI3) the corresponding clip information files (CLPI1,..., CLPI3).

4. Method according to any of claims 1-3, wherein each clip information file (CLPI1,...,CLPI3) is referenced fully or partially through at least one playlist (R_PL1,R_PL2).

5. Method according to claim 3, wherein the substreams contain source packets (SP) that include time stamps, and the links within the clip information files are references to said time stamps.

6. Method according to claim 3, 4 or 5, wherein three separate playlists (R_PL1,...,R_PL3) are automatically generated for the three clip information files (CLPI1,...,CLPI3).

7. Method according to claim 3, 4 or 5, wherein two separate playlists (R_PL1,R_PL2) are generated, the first playlist (R_PL1) referencing the first and second clip information files (CLPI1,CLPI2) and the second playlist (R_PL2) referencing the first and the third clip information file (CLPI2,CLPI3).

8. Method according to any of claims 1-7, wherein the smallest data unit that is accessible to the file system and that can be declared as a separate file is an Aligned Unit containing three sectors, wherein each sector contains up to 32 source packets with 192 bytes each.

9. Method according to any of claims 1-8, wherein the splitting position (SPL) is between stored source packets (SP).

10. Device for splitting a multimedia data stream into a first and a second substream, wherein a file system is employed for defining which data units belong to a file, the device including
- means (UI) for receiving a splitting position, wherein the splitting position may be within the smallest accessible data unit (AU51) provided by the application format under the used file system;
- means (FSM) for converting the smallest accessible data unit (AU51) that contains said splitting position, and optionally neighboring data units, into a separate first file; and
- means (FSM) for converting those remaining data units of the multimedia data stream that fully belong to the first substream into a second file, and those remaining data units of the multimedia data stream that fully belong to the second substream into a third file.

11. Device according to claim 10, wherein only the smallest accessible data unit (AU51) that contains said splitting position is converted into a separate first file.

12. Device according to claim 10 or 11, wherein converting said data units to the first, the second and the third files (S1,...,S3) comprises generating corresponding first, second and third clip information files (CLPI1,...,CLPI3), wherein said first, second and third files (S1,S2,S3) are referenced (PI1, PI21,PI22,PI3) through the corresponding clip information files (CLPI1,..., CLPI3).

## Patentansprüche

1. Verfahren zum Teilen eines Datenstroms (S), wobei der Datenstrom (S) eine oder mehrere Dateien umfasst, in einen ersten und in einen zweiten Teilstrom, wobei ein Dateisystem genutzt wird, um zu definieren, welche Dateneinheiten zu einer Datei gehören, wobei das Verfahren die folgenden Schritte umfasst:
- Detektieren der kleinsten Dateneinheit (AU51), die die beabsichtigte Teilungsposition (SPL) enthält und die als eine getrennte Datei definiert werden kann, innerhalb des Datenstroms (S);
- Erzeugen einer getrennten ersten Datei (S2), wobei die erste Datei (S2) die Dateneinheit (AU51) mit der beabsichtigten Teilungsposition (SPL) und optional eine oder mehrere Nachbardateneinheiten enthält;
- Erzeugen einer getrennten zweiten und dritten Datei (S1, S3), wobei die zweite Datei (S1) diejenigen Stromdaten (AU48, ..., AU50) enthält, die den Stromdaten (AU51) der ersten Datei (S2) vorangehen, und die dritte Datei (S3) diejenigen Stromdaten (AU52, ..., AU54) enthält, die auf die Stromdaten (AU51) der ersten Datei (S2) folgen; und
- Bezugnehmen (PI1, PI21) auf den ersten Teilstrom durch die erste und durch die zweite Datei (S2, S1) und Bezugnehmen (PI22, PI3) auf den zweiten Teilstrom durch die erste und durch die dritte Datei (S2, S3).

2. Verfahren nach Anspruch 1, wobei die getrennte erste Datei (S2) nur die Dateneinheit (AU51) enthält.

3. Verfahren nach Anspruch 1 oder 2, wobei das Erzeugen der ersten, der zweiten und der dritten Datei (S1, ..., S3) das Erzeugen einer entsprechenden ersten, zweiten und dritten Clip-Informationsdatei (CLPI1, ..., CLPI3) umfasst und wobei das Bezugnehmen auf die erste, auf die zweite und auf die dritte Datei (S1, S2, S3) das Bezugnehmen (PI1, PI21, PI22, PI3) auf die entsprechenden Clip-Informationsdateien (CLPI1, ..., CLPI3) umfasst.

4. Verfahren nach einem der Ansprüche 1-3, wobei auf jede Clip-Informationsdatei (CLPI1, ..., CLPI3) vollständig oder teilweise durch mindestens eine Wiedergabeliste (R_PL1, R_PL2) Bezug genommen wird.

5. Verfahren nach Anspruch 3, wobei die Teilströme Quellpakete (SP) enthalten, die Zeitstempel enthalten, und wobei die Verknüpfungen innerhalb der Clip-Informationsdateien Bezugnahmen auf die Zeitstempel sind.

6. Verfahren nach Anspruch 3, 4 oder 5, wobei für die drei Clip-Informationsdateien (CLPI1, ..., CLPI3) automatisch drei getrennte Wiedergabelisten (R-PL1, ..., R_PL3) erzeugt werden.

7. Verfahren nach Anspruch 3, 4 oder 5, wobei zwei getrennte Wiedergabelisten (R_PL1, R_PL2) erzeugt werden, wobei die erste Wiedergabeliste (R_PL1) auf die erste und auf die zweite Clip-Informationsdatei (CLPI1, CLPI2) Bezug nimmt und wobei die zweite Wiedergabeliste (R_PL2) auf die erste und auf die dritte Clip-Informationsdatei (CLPI2, CLPI3) Bezug nimmt.

8. Verfahren nach einem der Ansprüche 1-7, wobei die kleinste Dateneinheit, auf die das Dateisystem zugreifen kann und die als eine getrennte Datei deklariert werden kann, eine ausgerichtete Einheit (Aligned Unit) ist, die drei Sektoren enthält, wobei jeder Sektor bis zu 32 Quellpakete mit jeweils 192 Bytes enthält.

9. Verfahren nach einem der Ansprüche 1-8, wobei die Teilungsposition (SPL) zwischen gespeicherten Quellpaketen (SP) liegt.

10. Vorrichtung zum Teilen eines Multimediadatenstroms in einen ersten und in einen zweiten Teilstrom, wobei ein Dateisystem genutzt wird, um zu definieren, welche Dateneinheiten zu einer Datei gehören, wobei die Vorrichtung enthält:
- Mittel (UI) zum Empfangen einer Teilungsposition, wobei die Teilungsposition innerhalb der kleinsten zugreifbaren Dateneinheit (AU51), die durch das Anwendungsformat gemäß dem verwendeten Dateisystem bereitgestellt wird, liegen kann;
- Mittel (FSM) zum Umsetzen der kleinsten zugreifbaren Dateneinheit (AU51), die die Teilungsposition enthält, und optional von Nachbardateneinheiten in eine getrennte erste Datei; und
- Mittel (FSM) zum Umsetzen jener verbleibenden Dateneinheiten des Multimediadatenstroms, die vollständig zu dem ersten Teilstrom gehören, in eine zweite Datei und jener verbleibenden Dateneinheiten des Multimediadatenstroms, die vollständig zu dem zweiten Teilstrom gehören, in eine dritte Datei.

11. Vorrichtung nach Anspruch 10, wobei nur die kleinste zugreifbare Dateneinheit (AU51), die die Teilungsposition enthält, in eine getrennte erste Datei umgesetzt wird.

12. Vorrichtung nach Anspruch 10 oder 11, wobei das Umsetzen der Dateneinheiten in die erste, in die zweite und in die dritte Datei (S1, ..., S3) das Erzeugen einer entsprechenden ersten, zweiten und dritten Clip-Informationsdatei (CLPI1, ..., CLPI3) umfasst, wobei auf die erste, auf die zweite und auf die dritte Datei (S1, S2, S3) durch die entsprechenden Clip-Informationsdateien (CLPI1, ..., CLPI3) Bezug genommen wird (PI1, PI21, PI22, PI3).

## Revendications

1. Un procédé permettant de séparer un flux de données (S), le flux de données (S) comprenant un ou plusieurs fichiers, en un premier et un second sous-flux, dans lequel un système de fichier est utilisé pour définir les unités de données qui appartiennent à un fichier, le procédé comprenant les étapes suivantes :
- la détection dans le flux de données (S) de la plus petite unité de données (AU51) qui comprend la position de séparation prévue (SPL) et qui peut être définie comme un fichier distinct ;
- la génération d'un premier fichier distinct (S2), le premier fichier (S2) comprenant ladite unité de données (AU51) avec la position de séparation prévue (SPL) et en option, une ou plusieurs unités de données voisines ;
- la génération des second et troisième fichiers distincts (S1, S3), où le second fichier (Si) comprend les données de flux (AU48,..., AU50) précédant les données de flux (AU51) du premier fichier (S2) et le troisième fichier (S3) comprend les données de flux (AU52, ..., AU54) consécutives aux données de flux (AU51) du premier fichier (S2) et
- le référencement (PI1, PI21) du premier sous-flux via les premier et second fichiers (S2, S1) et le référencement (PI 22, PI13) du second sous-flux via les premier et troisième fichiers (S2, S3).

2. Procédé selon la revendication 1, dans lequel le premier fichier distinct (S2) comprend uniquement ladite unité de données (AU51).

3. Procédé selon la revendication 1 ou 2 dans lequel la génération des premier, second et troisième fichiers (S1, ..., S3) comprend la génération des premier, deuxième et troisième fichiers d'informations de clip correspondants (CLPI1, ..., CLPI3) et dans lequel ledit référencement des premier, deuxième et troisième fichiers (S1, S2, S3) comprend le référencement (PLi, PI21,P122,P13) des fichiers d'informations de clip correspondants (CLPI1, ..., CLPI3).

4. Procédé selon l'une quelconque des revendications 1 à 3, dans lequel chaque fichier d'informations de clip (CLPI1, ..., CLPI3) et référencé entièrement ou partiellement via une liste de lecture (R_PL1,R_PL2) au moins.

5. Procédé selon la revendication 3 dans lequel les sous-flux contiennent des paquets source (SP) qui comprennent des estampilles temporelles, et les liens dans les fichiers d'informations de clip sont des références auxdites estampilles temporelles.

6. Procédé selon la revendication 3, 4 ou 5 dans lequel trois listes de lecture distinctes (R_PL1,...,R_PL3) sont automatiquement générées pour les trois fichiers d'informations de clip (CLPI1,...,CLPI3).

7. Procédé selon la revendication 3, 4 ou 5, dans lequel deux listes de lecture distinctes (R_PL1,R_PL2) sont générées, la première liste de lecture (R_PL1) référençant les premier et second fichiers d'informations de clip (CLPI1,CLPI2) et la seconde liste de lecture (R_PL2) référençant les premier et troisième fichier d'informations de clip (CLPI2,CLPI3).

8. Procédé selon l'une quelconque des revendications 1 à 7, dans lequel la plus petite unité de données qui est accessible au système de fichier et qui peut être déclarée en tant que fichier distinct est une unité alignée contenant trois secteurs, dans lequel chaque secteur contient jusqu'à 32 paquets sources avec 192 octets chacun.

9. Procédé selon l'une quelconque des revendications 1 à 8, dans lequel la position de séparation (SPL) se trouve entre les paquets sources stockés (SP).

10. Dispositif permettant de séparer un flux de données multimédia en un premier et second sous-flux, dans lequel un système de fichier est utilisé pour définir les unités de données qui appartiennent à un fichier, le dispositif comprenant
- un moyen (UI) permettant de recevoir une position de séparation, dans lequel la position de séparation peut se trouver dans la plus petite unité de données accessibles (AU51) fournie par le format d'application sous le système de fichier utilisé ;
- un moyen (FSM) permettant de convertir la plus petite unité de données accessible (AU51) qui contient ladite position de séparation, et des unités de données voisines en option, en un premier fichier distinct ; et
- un moyen (FSM) permettant de convertir les unités de données restantes du flux de données multimédia qui appartiennent entièrement au premier sous-flux en un second fichier, et les unités de données restantes du flux de données multimédia qui appartiennent entièrement au second sous-flux en un troisième fichier.

11. Dispositif selon la revendication 10, dans lequel seule la plus petite donnée accessible (AU51) qui contient ladite position de séparation est convertie en un premier fichier distinct.

12. Dispositif selon la revendication 10 ou 11 dans lequel la conversion desdites unités de données vers les premier, second et troisième fichiers (S1, ..., S3) comprend la génération des premier, deuxième et troisième fichiers d'informations de clip correspondants (CLPI1, ..., CLPI3), dans lequel lesdits premier, deuxième et troisième fichiers (S1, S2, S3) sont référencés (Pli, PI21,P122,P13) via les fichiers d'informations de clip correspondants (CLPI1, ..., CLPI3).
